# EUROPEAN PATENT APPLICATION

(11) **EP 2 860 912 A1**
(43) Date of publication of application: **15.04.2015**
(21) Application number: 13382402.9
(22) Date of filing: 11.10.2013
(51) Int. Cl.: H04L 12/26, H04L 12/24

(54) **A method for correlating network traffic data from distributed systems and computer program thereof**

(71) Applicant: Telefonica Digital España, S.L.U., 28013 Madrid (ES)
(72) Inventor: Neystadt, John (Eugene), 28013 Madrid (ES); Brodny, Guy, 28013 Madrid (ES); Massover, Alex, 28013 Madrid (ES)
(74) Representative: Carlos Hernando, Borja

(57) **Abstract**

In a distributed telecommunication system a traffic data flow is generated by an entity and dispersed over several nodes of said distributed telecommunication system, the nodes sending and/or receiving said traffic data flow in the form of packets to/from other nodes of the distributed telecommunication system, the method comprising: collecting the packets traffic data from at least two of said nodes; and reassembling said collected packets into a single flow of traffic data, wherein said reassembling is performed by applying a correlation matching procedure based on correlation rules that are founded on a set of parameters comprising at least: Source address of the packets; Destination address of the packets; Transport network protocol used; Application protocol used including an application port number; and Matching rule including a configuration for extracting id of the packet.

## Description

### Field of the art

The present invention generally relates to the field of network traffic analysis, and more particularly to a method and a computer program for correlating network traffic data from distributed systems.

### Background of the invention

In network traffic analysis large amounts of data will be seen by a network analyzer. There exist a variety of methods or software applications for performing such tasks including static filtering by protocol headers or content during recording or viewing, session-id extraction by load balancers from URI, header or cookie in HTTP or SIP and/or tracking of secondary protocols such as FTP-data or RTP media.

US-A1-20130070608 'Identifying Related Network Traffic Data for Monitoring and Analysis' discloses a method of identifying a flow based on fingerprinting techniques, where same packets (on the transport level) travel between multiple routers, being potentially re-fragmented or encapsulated. While this method is better than other methods for integrating a variety of network traffic information from multiple sources, at multiple time scales, and at multiple levels it still does not provide for instance an approach for presenting the analysis results in form of timed data flow diagram (as opposed to list of packets), enabling to quickly grasp end-to-end flow and debug as the method of visualizing the flow.

A need therefore exists for improved network traffic analysis techniques.

### Summary of the Invention

According to a first aspect there is provided a method for correlating network traffic data from distributed systems, i.e. VoIP server, http server, etc., wherein in a distributed telecommunication system a traffic data flow generated by an entity is dispersed over several nodes of said distributed telecommunication system, said nodes sending and/or receiving said traffic data flow in the form of packets to/from other nodes of the distributed telecommunication system, the method comprising as commonly in the field: collecting the packets traffic data from at least two of said nodes; and reassembling said aggregated packets into a single flow of traffic data.

On contrary to the known proposals and in a characteristic manner, in the method of the first aspect said reassembling is performed by applying a correlation matching procedure based on correlation rules that are founded on a set of parameters including at least: Source address of the packets; Destination address of the packets; Transport network protocol used; Application protocol used including an application port number; and Matching rule including a configuration for extracting id of the packet.

Correlating these network flows of traffic data is important and useful for multiple purposes for instance for accounting, monitoring, troubleshooting, security analysis, etc.

The correlation rules are provided or taken from a network operator of said distributed telecommunication system.

In an embodiment, the correlation matching procedure may comprise matching more than one rule.

In an embodiment, the reassembled packets traffic data may be decrypted before applying said correlation matching procedure. In this case, a master decrypt key will be used further decrypting including at least a SSL certificate, an HTTPS or a SRTP.

The single flow of traffic data can be also outputted or displayed to a computer device such as a Smartphone, a PC, a tablet PC, a PDA, etc.

According to another aspect, a computing device includes a memory configured to store instructions and a processor configured to execute the instructions to perform a method according to claim 1.

In still another aspect, there is provided a computer program product having program instructions for instructing a processor of a computer system to apply correlation rules, when said program instructions are executed on a computer, a digital signal processor, a field-programmable gate array, an application-specific integrated circuit, a micro-processor, a micro-controller, or any other form of programmable hardware, in order to reassemble aggregated packets traffic data from a plurality of nodes of a distributed telecommunication system into a single flow of traffic data, said correlation rules founded on a set of parameters comprising at least: Source address of the packets; Destination address of the packets; Transport network protocol used; Application protocol used including an application port number; and Matching rule including a configuration for extracting id of the packet.

### Brief Description of the Drawings

The previous and other advantages and features will be more fully understood from the following detailed description of embodiments, with reference to the attached, which must be considered in an illustrative and non-limiting manner, in which:
Fig. 1 is a flow diagram illustrating the proposed method.
Fig. 2 is a flow diagram illustrating the different steps followed or executed by the present invention in order to correlate network flows into a single flow according to an embodiment.

### Detailed description of several embodiments

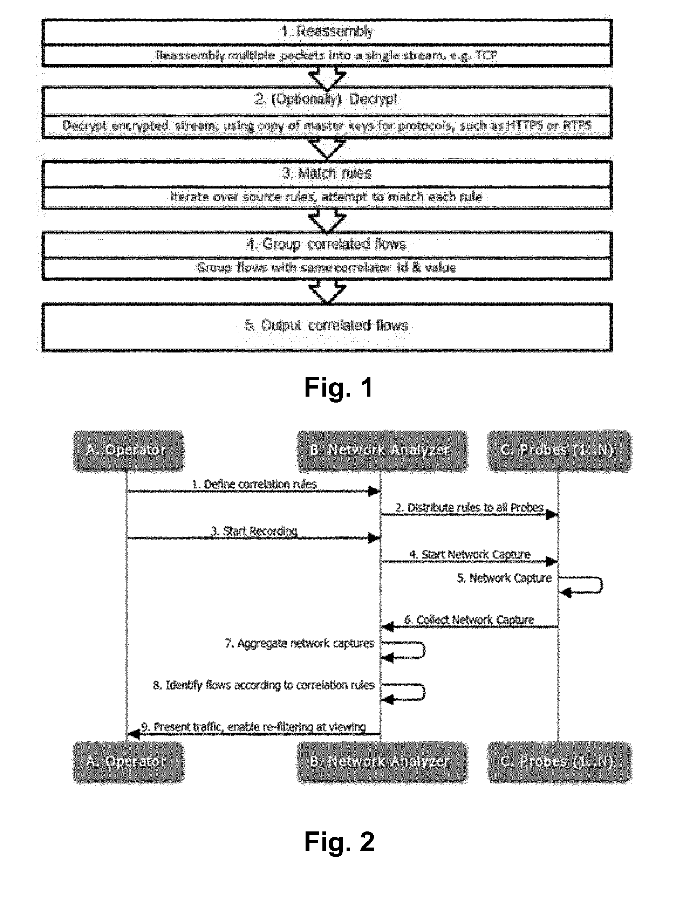

In reference to Fig. 1, and as previously described, the present invention in order to reassemble collected packets, such as TCP or UDP based, into a single flow of traffic data applies, for instance by means of using a computing device, a correlation matching procedure based on a set of configurable protocol correlation rules that are founded on a set of parameters. These set of parameters preferably will be, but not excluding others:
- Source address and destination address of the packets, e.g. exact network address or address mask 1.2.3.4 or 1.2.3/8, port, etc.
- Transport network protocol used, e.g. TCP or UDP.
- Application protocol, e.g. HTTP, SIP, FTP, etc. including application port number.
- Matching rule, for example: HTTP - HTTP Host/Uri, HTTP Cookie, Header/Value; SIP -Request URI, Header/Value, Tags; or Full text/binary search for TCP based protocols with packet reassembly, or UDP based on a single packet, including a configuration for extracting id from the packet. Each rule should include information on matching a correlation value in the packets.

Each matching rule preferably should include a configuration on how to extract matched flow id. Because, matching is protocol specific and can be done optionally with regular expressions.

Table 1 shows an example of these rules that can be used for applying said matching procedure.

| Name | Id | Correlator |
|---|---|---|
| HTTP | Transaction-Id | Source: * |
| | | Destination: * |
| | | Protocol: TCP |
| | | App Protocol: HTTP |
| | | Match-HTTP-Header: X-Transaction-ID:(\s+) |
| SIP | Transaction-Id | Source: * |
| | | Destination: * |
| | | Protocol: TCP |
| | | App Protocol: SIP |
| | | Match-SIP-Header: X-Transaction-ID:(\s+) |
| HTTP | User-Id | Source: * |
| | | Destination: * |
| | | Protocol: TCP |
| | | App Protocol: HTTP |
| | | Match-HTTP-Url: /(\s+)/ |

In case the collected packets traffic data is encrypted, the invention can optionally, according to an embodiment, include functionality for decrypting it, for which it would need to have master keys, such as SSL certificate supplied in advance.

Next each packet is iterated over every correlation rule and attempted to match it according to matching information in the rule, including said set of parameters: source address & port, destination address & port, protocol and application port.

During match, the correlation value is extracted from the network packet and is associated with the network flow under the id defined in the rule. Multiple correlation ids can be used, so each packet may match more than one rule with different correlation id.

Last step is assignment of entire network flow (e.g. a TCP or RTP stream) to the correlated flow, according to matched correlation value, so that all network flows with same correlation id and value will be grouped together.

According to an embodiment, the correlated flows may be also presented to a computer device. Moreover, it is also possible to re-filtering said single flow at viewing in said computer device.

There are multiple possible usages of correlated network flows, including, but not limited to: generating accounting events per flow with aggregated information from correlated flow, monitoring for reliability and performance, displaying correlated flows for troubleshooting, performing security analysis and detecting security incidents in correlated flows, etc.

In reference to Fig. 2, are illustrated the different steps executed to correlate network flows of traffic data into a single flow. For instance, for an implementation of a system for a network troubleshooting, where an Operator (A) deploys one or more Network Probes (C) in every network segment or nodes he is interested in monitoring, that can observe the traffic for example using port-mirroring technology found in a modern switched network. 1 Operator (A) defines correlation rules and deploys them in a network Analyzer (B). Network Analyzer can optionally 2 distribute rules to the probes (C) to improve performance and filter amount of recorded network traffic. Operator (A) then requests 3, to the Network analyzer (B), to start network capturing. Network Analyzer (B) 4 requests to all network probes (C) to start network capture. Following, Probes (C) perform network capture 5. Once network capture is completed, for instance by scheduled time or by an explicit Operator (A) request, Network Analyzer (B) collects 6 network captures from all probes (C). Network analyzer (B) then aggregates all captures and identifies 8 correlated flows according to correlated rules specified by Operator (A) in step 1. Network Analyzer (B) then may present 9 the correlated flows, formatting it if desired according to application protocols, and generating sequence diagram from the flows or via other presentation methods.

The scope of the present invention is defined in the following set of claims.

## Claims

1. A method for correlating network traffic data from distributed systems, wherein in a distributed telecommunication system a traffic data flow generated by an entity is dispersed over several nodes of said distributed telecommunication system, said nodes sending and/or receiving said traffic data flow in the form of packets to/from other nodes of the distributed telecommunication system, the method comprising:
- collecting the packets traffic data from at least two of said nodes; and
- reassembling said collected packets into a single flow of traffic data, **characterized in that** said reassembling is performed by applying a correlation matching procedure based on correlation rules that are founded on a set of parameters comprising at least: Source address of the packets; Destination address of the packets; Transport network protocol used; Application protocol used including an application port number; and Matching rule including a configuration for extracting id of the packet.

2. A method according to claim 1, wherein said correlation matching procedure comprises matching more than one rule.

3. A method according to claim 1, wherein said correlation rules are provided or taken from a network operator of said distributed telecommunication system.

4. A method according to claim 1, wherein said reassembled packets traffic data are decrypted before applying said correlation matching procedure .

5. A method according to claim 4, comprising using a master decrypt key for said decrypting including at least a SSL certificate, an HTTPS or a SRTP.

6. A method according to previous claims, further comprising outputting the single flow of traffic data to a computer device.

7. A computer program product having program instructions for instructing a processor of a computer system to apply correlation rules, when said program instructions are executed on a computer, a digital signal processor, a field-programmable gate array, an application-specific integrated circuit, a micro-processor, a micro-controller, or any other form of programmable hardware, in order to reassemble collected packets traffic data from a plurality of nodes of a distributed telecommunication system into a single flow of traffic data, said correlation rules founded on a set of parameters comprising at least: Source address of the packets; Destination address of the packets; Transport network protocol used; Application protocol used including an application port number; and Matching rule including a configuration for extracting id of the packet.
